# FASCICULE DE BREVET EUROPEEN

(11) **EP 3 763 317 B1**
(45) Date de publication et mention de la délivrance du brevet: **20.10.2021**
(21) Numéro de dépôt: 19185038.7
(22) Date de dépôt: 08.07.2019
(51) Int. Cl.: A61C 1/08

(54) **GUIDE DE FORAGE POUR IMPLANTOLOGIE DENTAIRE**
BOHRSCHABLONE FÜR DENTALE IMPLANTOLOGIE
DRILLING GUIDE FOR DENTAL IMPLANTOLOGY

(43) Date de publication de la demande: 13.01.2021
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- EP-A1- 2 921 128
- WO-A1-2012/099102
- DE-U1- 9 107 775
- US-A- 6 062 856
- US-A1- 2003 157 457

## Description

### DOMAINE TECHNIQUE DE L'INVENTION

La présente invention concerne le domaine de l'implantologie dentaire, et concerne plus particulièrement un guide de forage.

En implantologie dentaire, le praticien fore dans l'os maxillaire ou mandibulaire un trou cylindrique dans lequel il insère ensuite un implant. Le diamètre de forage du trou est choisi notamment en fonction de la densité de la matière osseuse.

Dans de l'os de faible densité (de type 3 ou 4 selon la classification de Misch), il est recommandé de percer à un diamètre réduit (plus faible que le diamètre maximal de l'implant) de façon que le trou présente un volume intérieur inférieur au volume de l'implant destiné à venir dans le trou. L'insertion de l'implant dans le trou provoque ainsi une compression de la matière osseuse en périphérie de l'implant, ce qui améliore la stabilité primaire de l'implant juste après son insertion, c'est-à-dire avant que l'os ait colonisé la surface périphérique de l'implant.

L'os cortical, qui se trouve en surface d'une matière osseuse de plus faible densité, n'est toutefois pas très compressible, et est parfois relativement fin. Ainsi, préalablement à l'insertion en force d'un implant dans le trou ménagé dans l'os de type 3 ou 4, il faut que le diamètre le plus grand de l'implant passe dans l'os cortical en surface, lequel est percé à un diamètre inférieur au diamètre maximal de l'implant. Il y a alors un risque de compression trop forte de l'os cortical, pouvant même mener à un éclatement de celui-ci. Cet éclatement se produit de façon prépondérante selon la direction vestibulo-palatine ou vestibulo-linguale selon laquelle l'épaisseur d'os cortical est très réduite. Une telle fracturation peut exposer l'implant et mener à un résultat désastreux d'un point de vue esthétique.

Le document WO 2012/099102 A1 décrit un guide de forage pour chirurgie dentaire comprenant deux canons de perçage disposés de façon parallèle l'un à l'autre pour ménager deux trous distincts dans l'os maxillaire ou mandibulaire d'un patient. Le positionnement de ce guide de forage sur la mâchoire maxillaire ou mandibulaire est assuré par des pointes venant se planter dans l'os à travers la gencive pour limiter les déplacements de la gencive par rapport à l'os lors du perçage des trous. Ce document ne donne aucun enseignement pour réduire les risques de compression excessive pouvant mener à un éclatement de l'os cortical selon la direction vestibulo-palatine ou vestibulo-linguale selon laquelle l'épaisseur d'os cortical est très réduite.

### EXPOSE DE L'INVENTION

Un problème proposé par la présente invention est de permettre au praticien de préparer un site d'implantation de façon rapide et facile pour l'insertion d'un implant, tout en réduisant le risque de fracturation de l'os cortical.

Simultanément, l'invention vise, même en cas de fracturation de l'os cortical, à limiter les risques d'une fracturation selon la direction vestibulo-palatine ou vestibulo-linguale.

Selon un autre aspect, la présente invention vise à favoriser la régénération osseuse selon la direction vestibulo-palatine ou vestibulo-linguale.

Pour atteindre ces objets ainsi que d'autres, l'invention propose un guide de forage pour chirurgie dentaire selon la revendication 1.

Le guide de forage selon l'invention peut être positionné sur la mâchoire du patient avec le cylindre des moyens de centrage engagés dans un premier trou (de faible diamètre) préalablement foré dans l'os mandibulaire ou maxillaire et destiné à recevoir l'implant. Le positionnement des deux canons de perçage par rapport au premier trou est ainsi fiable et précis. Le praticien oriente ensuite le guide autour de l'axe longitudinal de façon à placer les canons de perçage selon la ligne de crête osseuse (en d'autres termes selon l'arcade dentaire ou selon l'axe mésio-distal). Le praticien engage alors un foret dans les canons de perçage, et ces derniers guident ledit foret de façon fiable pour réaliser, de part et d'autre du premier trou, des trous secondaires qui intersectent la périphérie du premier trou. Cela a pour résultat d'élargir le premier trou selon la ligne de crête osseuse (en d'autres termes selon l'arcade dentaire ou selon l'axe mésio-distal). Lors du perçage des trous secondaires, le guidage du foret par les canons de perçage permet de préserver l'os se trouvant en direction du vestibule et l'os se trouvant en direction du palais ou de la langue.

Lors de l'insertion en force d'un implant dans le premier trou, la présence des trous secondaires limite les risques de fracturation de l'os cortical.

Même si une fracturation doit se produire, elle se produira préférentiellement selon la ligne de crête osseuse (en d'autres termes selon l'arcade dentaire ou selon l'axe mésio-distal), ce qui préservera l'os situé dans la direction vestibulaire, et dans la direction palatine (ou linguale).

Enfin, après implantation, l'implant viendra exercer une compression contre l'os situé dans la direction vestibulaire et contre l'os situé dans la direction palatine (ou linguale) qui est supérieure à la compression exercée dans la direction mésio-distale. On favorise ainsi la régénération osseuse selon la direction vestibulaire et selon la direction palatine (ou linguale).

Avantageusement, on peut prévoir que :
- les moyens de centrage sont destinés à pénétrer dans le trou selon une extrémité libre,
- la surface extérieure des canons de perçage se raccorde aux moyens de centrage par un épaulement à facette orientée vers l'extrémité libre des moyens de centrage.

Ladite facette forme une butée permettant une insertion contrôlée des moyens de centrage dans le premier trou (jusqu'à venir en butée), et procure ensuite un appui fiable du guide de forage.

De préférence, le guide de forage peut comporter des moyens de tenue s'étendant depuis la surface extérieure des canons de perçage radialement à l'écart de l'axe longitudinal.

Lesdits moyens de tenue permettent au praticien d'orienter et de maintenir de façon satisfaisante le guide de forage autour de l'axe longitudinal de façon à placer les canons de perçage selon la ligne de crête osseuse (en d'autres termes selon l'arcade dentaire ou selon l'axe mésio-distal).

Avantageusement, les moyens de tenue peuvent être reliés à la surface extérieure des canons de perçage en étant longitudinalement déportés à l'écart de l'épaulement, de préférence selon une distance de 1 mm à 5 mm.

On limite ainsi les risques de blesser les muqueuses environnantes du site de forage.

Dans un premier mode de réalisation du guide de forage, les moyens de tenue peuvent comprendre une tige s'étendant, depuis la surface extérieure des canons de perçage, radialement à l'écart de l'axe longitudinal.

Les moyens de tenue sont ainsi simples à fabriquer et à utiliser. Le diamètre extérieur dudit cylindre des moyens de centrage correspond alors sensiblement au diamètre intérieur du premier trou foré dans la mâchoire du patient.

Dans un deuxième mode de réalisation du guide de forage, on peut prévoir que :
- les deux canons de perçage sont reliés l'un à l'autre par l'intermédiaire de moyens de tenue élastiques tendant à rappeler les deux canons de perçage l'un à l'écart de l'autre dans un plan sensiblement perpendiculaire à l'axe longitudinal,
- le cylindre à section transversale sensiblement circulaire des moyens de centrage est formé par deux cylindres à section transversale sensiblement semi-circulaire et solidaires d'un canon de perçage respectif.

De tels moyens de tenue et de centrage permettent d'utiliser le guide de forage de façon fiable dans des premiers trous de différents diamètres.

Selon un autre aspect, la présente invention propose une utilisation d'un guide de forage tel que précédemment décrit lors d'une opération chirurgicale dentaire, lors de laquelle :
- on insère les moyens de centrage dans un trou préalablement foré dans l'os mandibulaire ou maxillaire d'un patient,
- on oriente le guide de forage par pivotement autour de l'axe longitudinal de façon que les canons de perçage soient sensiblement situés en correspondance de la ligne de l'arcade dentaire (ou ligne mésio-distale),
- on fore l'os mandibulaire ou maxillaire du patient en introduisant un foret dans chacun des canons de perçage en amenant l'extrémité libre dudit foret à recouvrement, selon l'axe longitudinal, des moyens de centrage.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective d'un guide de forage selon un premier mode de réalisation de l'invention ;
[Fig.2] La figure 2 est une vue de dessus du guide de forage de la figure 1 ;
[Fig.3] La figure 3 est une vue de côté du guide de forage de la figure 1 ;
[Fig.4] La figure 4 est une vue de dessous du guide de forage de la figure 1 ;
[Fig.5] La figure 5 est une vue en perspective d'un guide de forage selon un deuxième mode de réalisation de l'invention, dans une première configuration ;
[Fig.6] La figure 6 est une vue en perspective du guide de forage de la figure 5, dans une deuxième configuration ;
[Fig.7] La figure 7 est une vue en perspective d'une première étape d'utilisation du guide de forage de la figure 5 ;
[Fig.8] La figure 8 est une vue en perspective d'une deuxième étape d'utilisation du guide de forage de la figure 5 ;
[Fig.9] La figure 9 est une vue en perspective d'une troisième étape d'utilisation du guide de forage de la figure 5 ;
[Fig.10] La figure 10 est une vue en perspective d'une quatrième étape d'utilisation du guide de forage de la figure 5 ;
[Fig.11] La figure 11 est une vue en perspective de la matière osseuse après utilisation du guide de forage selon l'invention.

### DESCRIPTION DES MODES DE REALISATION PREFERES

Lorsque des références numériques identiques sont utilisées dans plusieurs modes de réalisation de l'invention, ces références numériques désignent des éléments identiques ou similaires dans chacun des modes de réalisation.

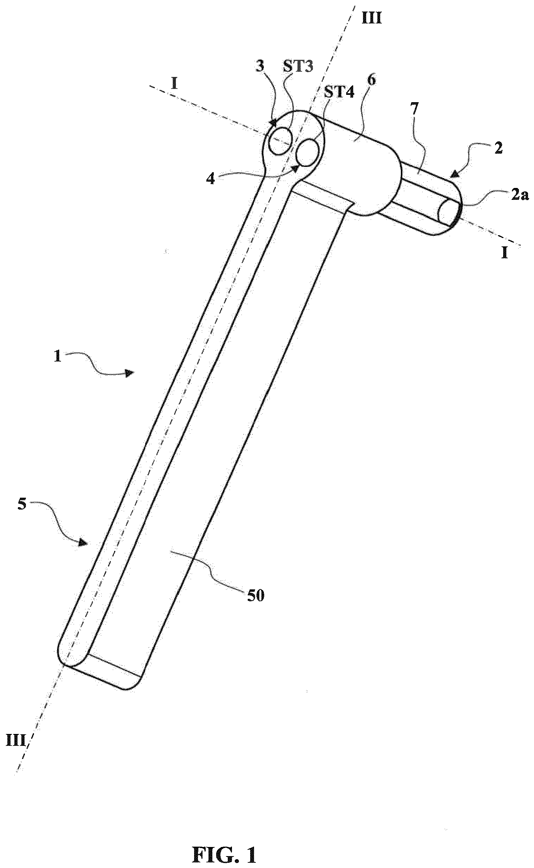

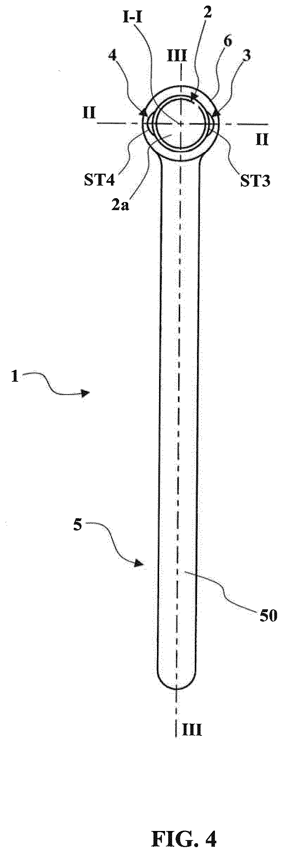

Sur les figures 1 à 4 est illustré un guide de forage 1 selon un premier mode de réalisation de l'invention.

Ce guide de forage 1 pour chirurgie dentaire, comprend des moyens de centrage 2 s'étendant selon un axe longitudinal I-I et destinés à pénétrer dans un trou préalablement foré dans l'os mandibulaire ou maxillaire d'un patient.

Le guide de forage 1 comprend également deux canons de perçage 3 et 4, sensiblement parallèles à l'axe longitudinal I-I et déportés latéralement de part et d'autre de l'axe longitudinal I-I selon un axe transversal II-II. En d'autres termes, les canons de perçage 3 et 4 sont diamétralement opposés par rapport à l'axe I-I.

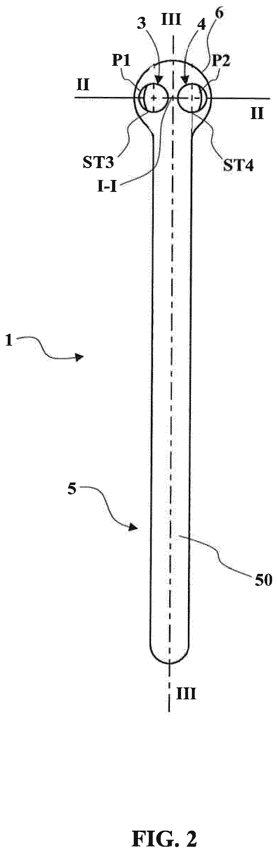

Comme on le voit mieux sur la figure 2, lesdits canons de perçage 3 et 4 se prolongent parallèlement à l'axe longitudinal I-I avec des sections transversales ST3 et ST4 (circulaires) qui intersectent respectivement une première partie P1 (en arc de cercle) et une deuxième partie P2 (en arc de cercle) de la périphérie de la section transversale (circulaire) des moyens de centrage 2.

Le guide de forage 1 comporte des moyens de tenue 5 qui s'étendent depuis la surface extérieure 6 des canons de perçage 3 et 4 radialement à l'écart de l'axe longitudinal I-I selon un axe transversal III-III. L'axe transversal III-III est perpendiculaire à l'axe transversal II-II. Les moyens de tenue 5 comprennent plus spécifiquement une tige 50.

Les moyens de centrage 2 comprennent un cylindre 7 à section transversale extérieure sensiblement circulaire avec un diamètre D7. Le cylindre 7 est destiné à pénétrer à faible jeu dans un trou préalablement foré dans l'os mandibulaire ou maxillaire d'un patient. Ledit trou présente ainsi un diamètre égal ou peu supérieur à D7.

Les canons de perçage 3 et 4 ont des diamètres inférieurs au diamètre D7.

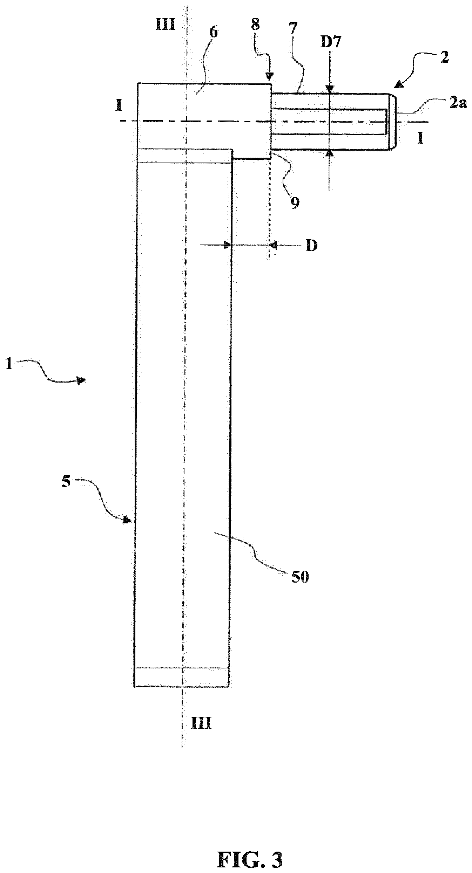

On voit plus particulièrement sur la figure 3 que les moyens de centrage 2 sont destinés à pénétrer dans le trou foré dans l'os mandibulaire ou maxillaire selon une extrémité libre 2a. La surface extérieure 6 des canons de perçage 3 et 4 se raccorde aux moyens de centrage 2 par un épaulement 8 à facette 9 orientée vers l'extrémité libre 2a des moyens de centrage 2.

Sur cette même figure 3, on voit que les moyens de tenue 5 sont reliés à la surface extérieure 6 des canons de perçage 3 et 4 en étant longitudinalement déportés à l'écart de l'épaulement 8, de préférence selon une distance D de 1 mm à 5 mm.

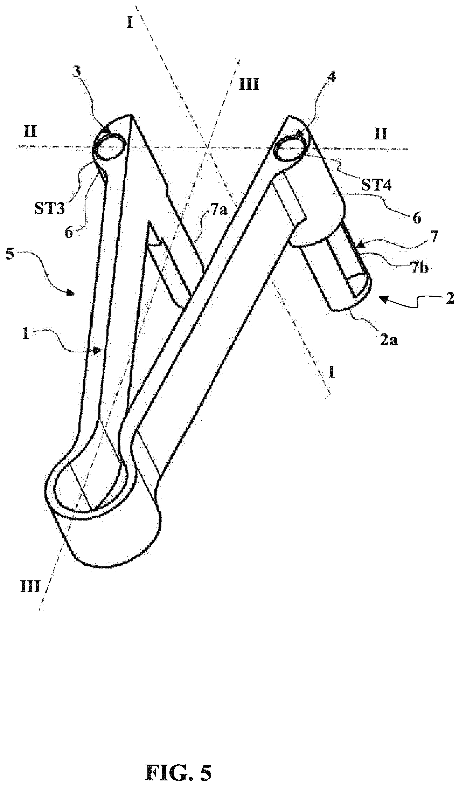

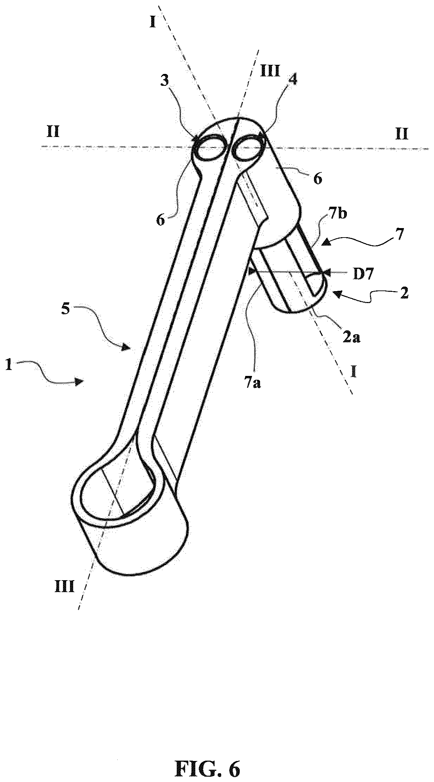

Sur les figures 5 et 6 est illustré un guide de forage 1 selon un deuxième mode de réalisation de l'invention.

Ce deuxième mode de réalisation diffère du premier mode de réalisation en ce que :
- les moyens de centrage 2 comprennent deux cylindres 7a et 7b à section transversale sensiblement semi-circulaire et solidaires d'un canon de perçage respectif 3 ou 4 (le cylindre 7a est solidaire du canon de perçage 3, tandis que le cylindre 7b est solidaire du canon de perçage 4),
- les deux canons de perçage 3 et 4 sont reliés l'un à l'autre par l'intermédiaire de moyens de tenue 5 élastiques tendant à rappeler les deux canons de perçage 3 et 4 l'un à l'écart de l'autre dans un plan sensiblement perpendiculaire à l'axe longitudinal I-I.

Sur la figure 5, le guide de perçage 1 est dans une première configuration dans laquelle les moyens de tenue 5 élastiques tiennent les deux canons de perçage 3 et 4 l'un à l'écart de l'autre.

Du fait du caractère élastique des moyens de tenue 5, on peut toutefois rapprocher les deux canons de perçage 3 et 4 l'un vers l'autre, jusqu'à les mettre en appui l'un contre l'autre, comme illustré sur la figure 6 qui illustre le guide de forage 1 dans une deuxième configuration.

Dans sa deuxième configuration, le guide de forage 1 du deuxième mode de réalisation est semblable au guide de forage 1 du premier mode de réalisation. Les deux cylindres 7a et 7b forment un cylindre de diamètre extérieur D7.

L'intérêt des moyens de tenue 5 élastiques du deuxième mode de réalisation est qu'ils permettent également d'utiliser de façon fiable le guide de forage 1 dans des trous préalablement forés dans l'os du patient qui présentent des diamètres supérieurs à D7.

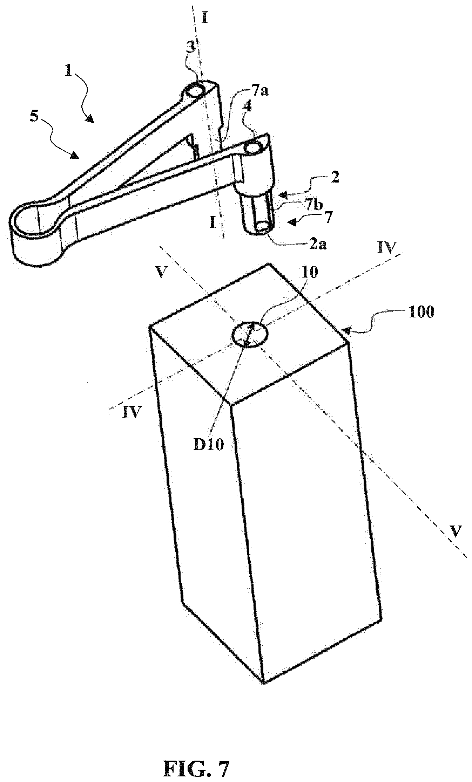

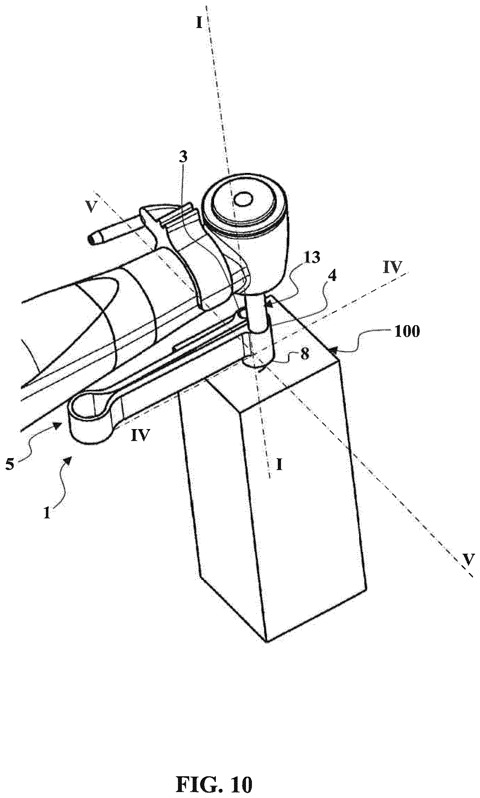

L'utilisation du guide de forage 1 selon le deuxième mode de réalisation va désormais être explicitée plus en détails à l'aide des figures 7 à 10.

Sur la figure 7, un trou 10 a été foré dans l'os 100 maxillaire ou mandibulaire du patient. L'axe IV-IV est l'axe vestibulo-palatin (ou vestibulo-lingual). L'axe V-V est l'axe mésio-distal. Le trou 10 présente ici un diamètre D10 légèrement supérieur au diamètre D7 du cylindre 7 à section transversale circulaire que forment par leur réunion les cylindres 7a et 7b à sections transversales semi-circulaires.

Lors d'une première étape, le praticien se saisit du guide de forage 1 qui se trouve initialement dans sa première configuration (figure 5) dans laquelle les cylindres 7a et 7b se trouvent à l'écart l'un de l'autre.

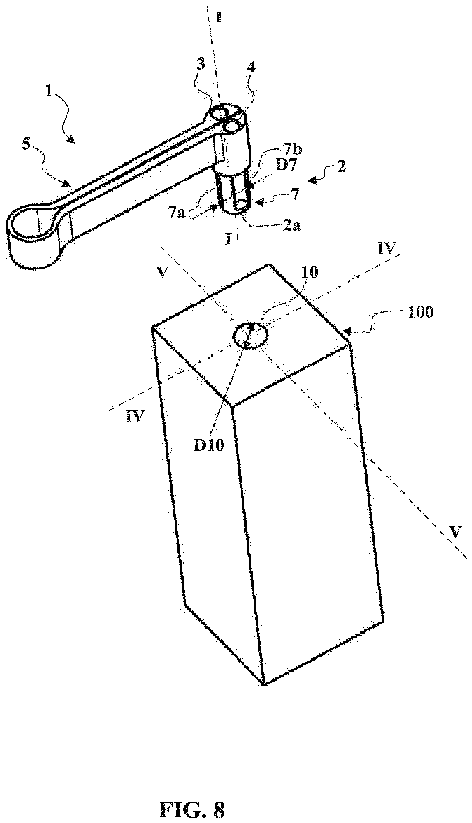

Lors d'une deuxième étape (figure 8), le praticien agit sur les moyens de tenue 5 élastiques pour rapprocher les canons de perçage 3 et 4 (et donc les cylindres 7a et 7b) jusqu'à les amener en contact l'un de l'autre, de sorte que les cylindres 7a et 7b semi-circulaires forment un cylindre 7 circulaire de diamètre D7 (inférieur au diamètre D10).

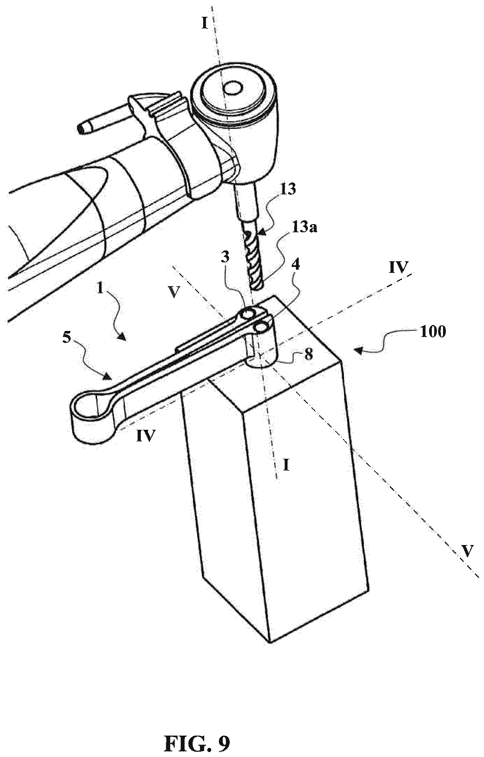

Lors d'une troisième étape (figure 9), le praticien engage le cylindre 7 des moyens de centrage 2 selon leur extrémité libre 2a par un mouvement de translation selon l'axe de forage du trou 10, et ce jusqu'à amener l'épaulement 8 en butée contre l'os 100 situé en périphérie du trou 10.

Le praticien relâche ensuite les moyens de tenue 5 élastiques, lesquels écartent alors les canons de perçage 3 et 4 l'un à l'écart de l'autre et ont ainsi pour effet d'amener les cylindres 7a et 7b semi-circulaires en appui de part et d'autre de la surface latérale du trou 10.

Le praticien vérifie alors la bonne orientation des canons de perçage 3 et 4 selon l'axe mésio-distal V-V, et corrige au besoin celle-ci en utilisant les moyens de tenue 5 pour pivoter le guide de forage 1 autour de l'axe longitudinal I-I.

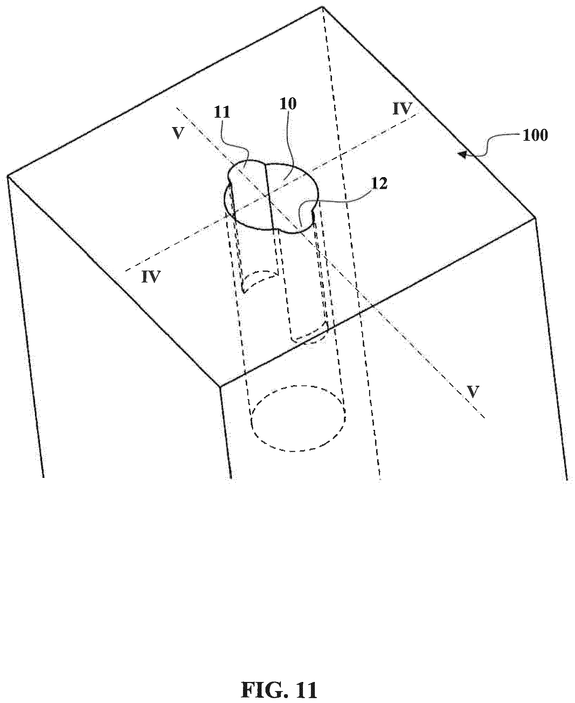

Lors d'une quatrième étape, le praticien introduit un foret 13 successivement dans chacun des canons de perçage 3 et 4 pour réaliser des trous secondaires 11 et 12 (figure 11) qui intersectent la périphérie du premier trou 10.

Lors de ces forages, le praticien introduit le foret 13 successivement dans l'un puis l'autre des canons de perçage 3 et 4, en amenant l'extrémité libre 13a dudit foret 13 à recouvrement, selon l'axe longitudinal I-I, des moyens de centrage 2.

Ces forages ont pour résultat d'élargir le premier trou 10 selon la ligne de crête osseuse (en d'autres termes selon l'arcade dentaire ou selon l'axe mésio-distal).

Lors du perçage des trous secondaires 11 et 12, le guidage du foret 13 par les canons de perçage 3 et 4 permet de préserver l'os 100 se trouvant en direction du vestibule et l'os se trouvant en direction du palais ou de la langue (c'est-à-dire l'os 100 disposé selon l'axe IV-IV).

Lors de l'insertion en force d'un implant dans le premier trou 10, la présence des trous secondaires 11 et 12 limite les risques de fracturation de l'os 100 cortical.

Même si une fracturation doit se produire, elle se produira préférentiellement selon la ligne de crête osseuse (en d'autres termes selon l'arcade dentaire ou selon l'axe mésio-distal V-V), ce qui préservera l'os 100 situé dans la direction vestibulaire, et dans la direction palatine (ou linguale) (c'est-à-dire l'os 100 disposé selon l'axe IV-IV).

Enfin, après implantation, l'implant viendra exercer une compression contre l'os 100 situé dans la direction vestibulaire et contre l'os 100 situé dans la direction palatine (ou linguale) (c'est-à-dire l'os 100 disposé selon l'axe IV-IV) qui est supérieure à la compression exercée dans la direction mésio-distale (axe V-V). On favorise ainsi la régénération osseuse selon la direction vestibulaire et selon la direction palatine (ou linguale).

L'utilisation du guide de forage 1 selon le premier mode de réalisation de l'invention est très similaire à celle du guide de forage 1 selon le deuxième mode de réalisation. La seule différence notable est que, lors de l'utilisation du guide de forage 1 selon le premier mode de réalisation, on engage le cylindre 7 dans un trou 10 de diamètre D10 peu supérieur ou égal au diamètre D7.

La présente invention n'est pas limitée aux modes de réalisation qui ont été explicitement décrits, mais elle en inclut les diverses variantes et généralisations contenues dans le domaine des revendications ci-après.

## Revendications

1. Guide de forage (1) pour chirurgie dentaire, comprenant :
- des moyens de centrage (2) s'étendant selon un axe longitudinal (I-I),
- deux canons de perçage (3, 4), sensiblement parallèles à l'axe longitudinal (I-I) et déportés latéralement de part et d'autre de l'axe longitudinal (I-I), **caractérisé en ce que** :
- les moyens de centrage (2) comprennent un cylindre (7) à section transversale sensiblement circulaire destiné à pénétrer dans un trou (10) foré dans l'os (100) mandibulaire ou maxillaire d'un patient,
- lesdits canons de perçage (3, 4) se prolongent parallèlement à l'axe longitudinal (I-I) avec des sections transversales (ST3, ST4) qui intersectent respectivement une première partie (P1) et une deuxième partie (P2) de la périphérie de la section transversale du cylindre (7) des moyens de centrage (2).

2. Guide de forage (1) selon la revendication 1, **caractérisé en ce que** :
- les moyens de centrage (2) sont destinés à pénétrer dans le trou (10) selon une extrémité libre (2a),
- la surface extérieure (6) des canons de perçage (3, 4) se raccorde aux moyens de centrage (2) par un épaulement (8) à facette (9) orientée vers l'extrémité libre (2a) des moyens de centrage (2).

3. Guide de forage (1) selon l'une des revendications 1 ou 2,
**caractérisé en ce qu'**il comporte des moyens de tenue (5) s'étendant, depuis la surface extérieure (6) des canons de perçage (3, 4), radialement à l'écart de l'axe longitudinal (I-I).

4. Guide de forage (1) selon les revendications 2 et 3,
**caractérisé en ce que** les moyens de tenue (5) sont reliés à la surface extérieure (6) des canons de perçage (3, 4) en étant longitudinalement déportés à l'écart de l'épaulement (8), de préférence selon une distance (D) de 1 mm à 5 mm.

5. Guide de forage (1) selon l'une des revendications 3 ou 4,
**caractérisé en ce que** les moyens de tenue (5) comprennent une tige (50) s'étendant depuis la surface extérieure (6) des canons de perçage (3, 4) radialement à l'écart de l'axe longitudinal (I-I).

6. Guide de forage (1) selon l'une quelconque des revendications 1 à 4, **caractérisé en ce que** :
- les deux canons de perçage (3, 4) sont reliés l'un à l'autre par l'intermédiaire de moyens de tenue (5) élastiques tendant à rappeler les deux canons de perçage (3, 4) l'un à l'écart de l'autre dans un plan sensiblement perpendiculaire à l'axe longitudinal (I-I),
- le cylindre (7) à section transversale sensiblement circulaire des moyens de centrage (2) est formé par deux cylindres (7a, 7b) à section transversale sensiblement semi-circulaire et chacun solidaires d'un canon de perçage (3, 4) respectif.

## Patentansprüche

1. Bohrerführung (1) für die Zahnchirurgie, umfassend:
- Zentriermittel (2), die sich entlang einer Längsachse (I-I) erstrecken
- zwei Führungsbuchsen (3, 4), im Wesentlichen parallel zu der Längsachse (I-I) und seitlich zu beiden Seiten der Längsachse (I-I) versetzt sind,
**dadurch gekennzeichnet, dass:**
- die Zentriermittel (2) einen Zylinder (7) mit einem im Wesentlichen kreisförmigen Querschnitt umfasst, der dazu bestimmt ist, in ein in den Knochen (100) des Unter- oder Oberkiefers eines Patienten gebohrtes Loch (10) einzudringen,
- besagte Führungsbuchsen (3, 4), die sich parallel zu der Längsachse (I-I) mit Querschnitten (ST3, ST4) verlängern, die jeweils einen ersten Teil (P1) und einen zweiten Teil (P2) der Peripherie des Querschnitts des Zylinder (7) der Zentriermittel (2) schneiden.

2. Bohrerführung (1) nach Anspruch 1, **dadurch gekennzeichnet, dass**:
- die Zentriermittel (2) dazu bestimmt sind, entlang eines freien Endes (2a) in das Loch (10) einzudringen,
- die Außenoberfläche (6) der Führungsbuchsen (3, 4) mit dem Zentriermittel (2) durch einen Anschlag (8) mit einer zum freien Ende (2a) des Zentriermittels (2) orientierten Facette (9) verbunden ist.

3. Bohrerführung (1) nach einem der Ansprüche 1 oder 2, **dadurch gekennzeichnet, dass** sie Haltemittel (5) aufweist, die sich in radialer Richtung weg von der Längsachse (I-I) von der Außenoberfläche (6) der Führungsbuchsen (3, 4) erstrecken.

4. Bohrerführung (1) nach den Ansprüchen 2 und 3, **dadurch gekennzeichnet, dass** die Haltemittel (5) mit der Außenoberfläche (6) der Führungsbuchsen (3, 4) verbunden sind, in Längsrichtung versetzt zu dem Anschlag (8), vorzugsweise entlang eines Abstands (D) von 1 mm bis 5 mm.

5. Bohrerführung (1) nach einem der Ansprüche 3 oder 4, **dadurch gekennzeichnet, dass** die Haltemittel (5) eine Stange (50) umfassen, die sich in radialer Richtung weg von der Längsachse (I-I) von der Außenoberfläche (6) der Führungsbuchsen (3, 4) erstreckt.

6. Bohrerführung (1) nach einem der Ansprüche 1 bis 4, **dadurch gekennzeichnet, dass**:
- die beiden Führungsbuchsen (3, 4) miteinander durch elastische Haltemittel (5) verbunden sind, die dazu tendieren, die beiden Führungsbuchsen (3, 4) mit einem Abstand zueinander in einer Ebene zu halten, die im Wesentlichen senkrecht zu der Längsachse (I-I) ist,
- der Zylinder (7) der Zentriermittel (2) mit im Wesentlichen kreisförmigen Querschnitt mit zwei Zylindern (7a, 7b) mit im Wesentlichen halbkreisförmigem Querschnitt und jeder einstückig mit einer jeweiligen Führungsbuchse (3, 4) geformt ist.

## Claims

1. Drilling guide (1) for dental surgery, comprising:
- centring means (2) extending along a longitudinal axis (I-I),
- two drilling bushes (3, 4) substantially parallel to the longitudinal axis (I-I) and offset laterally on either side of the longitudinal axis (I-I) ,
**characterized in that**:
- the centring means (2) comprise a cylinder (7) of substantially circular cross section intended to penetrate a hole (10) drilled in the mandibular or maxillary bone (100) of a patient,
- said drilling bushes (3, 4) continue parallel to the longitudinal axis (I-I) with cross sections (ST3, ST4) which respectively intersect a first part (P1) and a second part (P2) of the periphery of the cross section of the cylinder (7) of the centring means (2).

2. Drilling guide (1) according to Claim 1, **characterized in that**:
- the centring means (2) are intended to penetrate the hole (10) along a free end (2a),
- the outer surface (6) of the drilling bushes (3, 4) is connected to the centring means (2) by a shoulder (8) with a facet (9) oriented towards the free end (2a) of the centring means (2).

3. Drilling guide (1) according to either of Claims 1 and 2, **characterized in that** it has holding means (5) extending, from the outer surface (6) of the drilling bushes (3, 4), radially away from the longitudinal axis (I-I).

4. Drilling guide (1) according to Claims 2 and 3, **characterized in that** the holding means (5) are connected to the outer surface (6) of the drilling bushes (3, 4) by being longitudinally offset away from the shoulder (8), preferably by a distance (D) of 1 mm to 5 mm.

5. Drilling guide (1) according to either of Claims 3 and 4, **characterized in that** the holding means (5) comprise a rod (50) extending, from the outer surface (6) of the drilling bushes (3, 4), radially away from the longitudinal axis (I-I).

6. Drilling guide (1) according to any one of Claims 1 to 4, **characterized in that**:
- the two drilling bushes (3, 4) are connected to each other by way of elastic holding means (5) tending to return the two drilling bushes (3, 4) away from one another in a plane substantially perpendicular to the longitudinal axis (I-I),
- the cylinder (7), of substantially circular cross section, of the centring means (2) is formed by two cylinders (7a, 7b) of substantially semicircular cross section, each of them integral with a respective drilling bush (3, 4).
